# EUROPÄISCHE PATENTANMELDUNG

(11) **EP 3 957 608 A1**
(43) Veröffentlichungstag der Anmeldung: **23.02.2022**
(21) Anmeldenummer: 21187496.1
(22) Anmeldetag: 23.07.2021
(51) Int. Cl.: C02F 1/28, B01D 15/18, B01J 20/20, C02F 1/00, B01J 20/28, C02F 101/30

(54) **VERFAHREN UND VORRICHTUNG ZUR BEHANDLUNG VON ABWASSER**

(30) Priorität: 18.08.2020 CH 10292020
(71) Anmelder: Meyer, David, 6317 Oberwil b. Zug (CH)
(72) Erfinder: Meyer, David, 6317 Oberwil b. Zug (CH)
(74) Vertreter: Rutz & Partner

(57) **Zusammenfassung**

Das Verfahren und die Vorrichtung dienen der Behandlung von Abwasser (2) insbesondere zur Beseitigung von Mikroverunreinigungen in einer Kläranlage mit einem Reaktor (1), der eine Eintrittsöffnung (11) für das Abwasser (2), eine Kontaktzone (101), in der granulierte Aktivkohle (31) mit dem Abwasser (2) zusammenwirkt, eine Überstandszone (102) und eine daran anschliessende Austrittsöffnung (12) aufweist, aus der das gereinigte Abwasser (2) austritt. Erfindungsgemäss ist vorgesehen, dass die hydraulischer Belastung der Kläranlage bestimmt und wenigstens zwischen einer tiefen hydraulischen Belastung und einer hohen hydraulischen Belastung unterschieden wird, dass dem Abwasser (2) bei hoher hydraulischer Belastung pulverförmige Aktivkohle (32) zugegeben wird, und dass das im Reaktor (1) gereinigte Abwasser (2) einer Filterstufe (8) zugeführt wird, in der die pulverförmige Aktivkohle (32) vom gereinigten Abwasser (2) wieder entfernt wird.

## Beschreibung

Die vorliegende Erfindung betrifft ein Verfahren und eine Vorrichtung für Kläranlagen zur Behandlung von Abwasser z.B. kommunaler und industrieller Herkunft, insbesondere um Mikroverunreinigungen und organische, natürliche Kleinstteile aus dem Abwasser zu eliminieren.

Täglich gelangen Rückstände organischer Chemikalien - wie Medikamente, Reinigungsmittel, Rostschutzmittel, Pestizide oder dergleichen - nach deren Verwendung als Mikroverunreinigungen in die Gewässer. Hier können sie sich nachteilig auf Wasserlebewesen auswirken und die Trinkwasserressourcen belasten. Beim Eintrag solcher Spurenstoffe spielen auch diffuse Quellen, wie Quellen der Landwirtschaft eine Rolle, doch stammen Medikamente und weitere Chemikalien zu einem Grossteil aus dem Abwasser der kommunalen Kläranlagen. Konventionelle Abwasserreinigungsanlagen (ARA) können derartige Rückstände kaum eliminieren, weshalb eine Nachrüstung dieser Anlagen im Gange ist (siehe [1], "Mikroverunreinigungen aus kommunalen Abwasser, Verfahren zur weitgehenden Elimination auf Kläranlagen", Herausgeberin Bundesamt für Umwelt BAFU, Bern 2012.

Die Offenlegungsschrift CH715008A2 offenbart eine Verfahren zur Behandlung von Abwasser in einer Kläranlage, bei dem in einem Reaktor das Abwasser in aufwärtsgerichteter Strömung durch ein Adsorptionsmittel hindurch geleitet wird. Als Adsorptionsmittel wird üblicherweise Aktivkohle in Form von granulierter Aktivkohle (nachstehend GAK) mit einem Partikeldurchmesser typischerweise im Bereich von 100 Mikrometer bis 2000 Mikrometer) oder in Form von pulverförmiger Aktivkohle (nachstehend PAK) mit einem Partikeldurchmesser typischerweise im Bereich von 3 bis 100 Mikrometer verwendet.

Das in der CH715008A2 beschriebene Verfahren umfasst zwei Prozessphasen, die innerhalb von Prozesszyklen alternierend durchlaufen werden. In der ersten Beschickungsphase wird dem Adsorptionsmaterial das Abwasser zugeführt. In der zweiten Ruhephase wird der Wasserzufluss abgestellt oder stark reduziert. Im unteren Teil des Reaktors befindet sich die Kontaktzone und im oberen Teil die Überstandszone. Während der Beschickungsphase wird gereinigtes Wasser aus der Überstandszone weggeführt. Während der Ruhephase ist die Konzentration des Adsorptionsmittels innerhalb der Kontaktzone sehr hoch, weshalb eine hohe Adsorption von Mikroverunreinigungen innerhalb einer kurzen Zeitperiode erfolgt, in der das Adsorptionsmittel aus der Überstandszone absinkt. Sobald eine ausreichende Sedimentation erfolgt ist, wird der nächste Prozesszyklus eingeleitet.

Kläranlagen, die Aktivkohle als Adsorptionsmittel verwenden, werden durch die täglichen Schwankungen der Abwassermengen (hydraulische Schwankungen) oft vor grosse Herausforderungen gestellt. In der Nacht sind die in der Kläranlage zu behandelnden Abwassermengen normalerweise gering. Bei einem Regenereignis kann die zu behandelnde Abwassermenge hingegen bis zu einem Faktor 10 gegenüber den üblichen Nachtminima anwachsen. Viele Kläranlagen haben in 80% - 90% der Zeit daher nur eine geringe hydraulische Belastung und sind typischerweise lediglich in 10% -20% der Zeit stark oder voll ausgelastet. Es ist daher eine Herausforderung für Kläranlagen, mit grösseren Schwankungen der Abwassermengen umzugehen.

Bei einem weiteren bekannten Verfahren wird pulverförmige Aktivkohle (PAK) vor einem Filter (GAK-Filter) mit granulatförmiger Aktivkohle (GAK) zugegeben, der von unten nach oben durchströmt wird. Der GAK-Filter hat die primäre Aufgabe, Schwebestoffe im Abwasser zu filtern. Dieser GAK-Filter darf nur langsam durchflossen werden, damit die GAK-Körner nicht in Schwebe geraten und die Filterwirkung für die Schwebestoffe verloren wäre. Dieses Verfahren erlaubt nur vergleichsweise geringer Durchsatzraten und ist hinsichtlich von Schwankungen der Abwassermengen nicht flexibel. Da bei diesem Verfahren die PAK zwischen den GAK-Körnern zurückgehalten wird und die Zwischenräume verschlossen werden, ist, eine kontinuierliche Spülung des GAK-Filters erforderlich.

Der vorliegenden Erfindung liegt daher die Aufgabe zugrunde, ein verbessertes Verfahren und eine verbesserte Vorrichtung für Kläranlagen anzugeben, mittels denen eine optimierte Elimination von Verunreinigungen, insbesondere Mikroverunreinigungen auch bei Schwankungen der zu behandelnden Abwassermengen sichergestellt werden kann.

Mit dem erfindungsgemässen Verfahren sollen Mittel zur Beseitigung der Mikroverunreinigungen, wie Aktivkohle, effizienter eingesetzt werden. Das Verfahren zur Reinigung des Abwassers soll daher mit erhöhter Effizienz und reduzierten Kosten durchgeführt werden können.

Weiterhin soll die Aktivkohle weniger Raum benötigen als bei bisherigen Verfahren.

Das erfindungsgemässe Verfahren soll es daher erlauben, Spitzenlasten zuverlässig und effizient aufzufangen und Grundlasten mit minimalem Aufwand abzuarbeiten.

Die Lösung dieser Aufgabe gelingt mit einem Verfahren gemäss Anspruch 1 und einer Vorrichtung gemäss Anspruch 9. Vorteilhafte Ausgestaltungen der Erfindung sind in den abhängigen Ansprüchen angegeben.

Das Verfahren und die Vorrichtung dienen der Behandlung von Abwasser insbesondere zur Beseitigung von Mikroverunreinigungen in einer Kläranlage mit einem Reaktor, der eine Eintrittsöffnung für das Abwasser, eine Kontaktzone, in der granulierte Aktivkohle (GAK) mit dem Abwasser zusammenwirkt, eine Überstandszone und eine daran anschliessende Austrittsöffnung aufweist, aus der das gereinigte Abwasser austritt.

Erfindungsgemäss ist vorgesehen, dass die hydraulische Belastung der Kläranlage bestimmt und wenigstens zwischen einer tiefen hydraulischen Belastung und einer hohen hydraulischen Belastung unterschieden wird, dass dem Abwasser bei hoher hydraulischer Belastung pulverförmige Aktivkohle (PAK) zugegeben wird, und dass das mit PAK angereicherte Abwasser einer Filterstufe zugeführt wird, in der die PAK vom gereinigten Abwasser wieder entfernt wird.

Die erfindungsgemässe Vorrichtung arbeitet in wenigstens zwei verschiedenen Prozessphasen, die einander, beispielsweise durch einen Betriebsrechner gesteuert, in Abhängigkeit der Höhe der hydraulischen Belastung ablösen. Der Ablauf der verschiedenen Prozessphasen kann von Tag zu Tag z.B. in Abhängigkeit der Wetterlage schlagartig ändern. Stets wird die Anlage jedoch optimal betrieben und die Adsorptionsmittel GAK und PAK effizient eingesetzt.

Die Höhe der hydraulischen Belastung kann auf verschiedene Arten gemessen werden. Es können Pegelstände vorgelagerter Becken, Strömungsgeschwindigkeiten des Abwassers, oder der Zufluss des Abwassers zum Reaktor gemessen werden. Ferner können Ventilstellungen oder entsprechende Messwerte oder Steuersignale beispielsweise mittels eines Steuerrechners überwacht werden.

Beispielsweise wird ein Strömungsbereich für das dem Reaktor zugeführte Abwasser festgelegt, innerhalb dessen stets die erste Prozessphasen implementiert ist. Sobald dieser Strömungsbereich überschritten wird, wird die zweite Prozessphasen implementiert, in der dem Abwasser PAK zugegeben wird. In vorzugsweisen Ausgestaltungen wird vorgesehen, dass das Mass der Zugabe der PAK in Abhängigkeit oder proportional zur Höhe der Belastung der Kläranlage, gegebenenfalls in Abhängigkeit des Zustroms von Abwasser in den Reaktor oder in hohe des zusätzlichen Abwasserflusses bzw. der Spitzenbelastung, dem Abwasser zugeführt wird.

PAK ist ein Pulver mit entsprechend kleinem Korn aber einer sehr grossen Oberfläche, weshalb PAK rascher mit Mikroverunreinigungen reagiert als GAK. Wegen der kleinen Korngrösse wird PAK jedoch bereits bei geringsten Steiggeschwindigkeiten im Wasserstrom mittransportiert und aus dem Reaktor geschwemmt und ist für einen erneuten Einsatz verloren. Mit dem vorliegenden Verfahren wird die Verwendung von PAK vermieden, falls die gewünschte Elimination von Mikroverunreinigungen im Abwasser allein durch GAK erzielt werden kann. Beim Einsatz von PAK bei höherer hydraulische Belastung wird die eingesetzte PAK nach der Reinigung des Abwassers hingegen zurückgenommen. Für die Abarbeitung der Grundlast wird somit GAK effizient eingesetzt. Für die zusätzliche Abarbeitung von Spitzenlasten kommt PAK vorteilhaft zum Einsatz.

Beim erfindungsgemässen Verfahren wird das Abwasser in beiden Prozessphasen vorzugsweise in aufwärtsgerichteter Strömung durch die GAK im Reaktor geleitet. Alternativ wird das mit PAK angereicherte Abwasser nicht durch den Reaktor, sondern direkt zur Filterstufe geführt.

Für tiefe hydraulische Belastungen der Kläranlage mit relativ geringen Abwassermengen, beispielsweise bei Trockenwetter, wird vorzugsweise so viel GAK bzw. GAK mit einer GAK-Betthöhe im Reaktor vorgesehen, wie dies in der ersten Prozessphase erforderlich ist, um Mikroverunreinigungen mit einem gewünschten Eliminationsgrad aus dem Abwasser zu beseitigen. Bei höherer hydraulischer Belastung der Kläranlage, typischerweise bei Regenwetter, wird dem zufliessenden Abwasser PAK vorzugsweise bereits vor dem Reaktor zugegeben. In der Folge kann das mit PAK angereicherte Abwasser durch den Reaktor oder direkt, gegebenenfalls durch ein Hilfsbecken, zur Filterstufe geführt werden.

Da sich bei höherer hydraulischer Belastung die Durchflusszeit des Abwassers durch den Reaktor und somit durch die im Reaktor gelagerte GAK verkürzt, ist die GAK nicht mehr in der Lage den gleichen Anteil an Mikroverunreinigungen aus dem durchfliessenden Abwasser zu entfernen, weshalb die Eliminationsrate ohne Zugabe von PAK absinken würde.

Die Zugabe der PAK erlaubt es somit, den Grad der Elimination von Mikroverunreinigungen auch bei erheblichen Belastungsschwankungen zumindest annähernd konstant zu halten. Die Eliminationsrate kann bei präzise Überwachung der hydraulischen Belastung und entsprechender Dosierung der PAK auf einen gewünschten Wert geregelt werden. Sofern über längere Zeit mit einer geringeren oder stärkeren hydraulischen Belastung gerechnet wird, wird vorzugsweise auch der GAK-Anteil temporär abgesenkt oder erhöht.

Ein weiterer Vorteil des erfindungsgemässen Verfahrens ist der relativ geringe Materialbedarf für die GAK, der entsprechend geringe Platzbedarf für die GAK bei gleichzeitig hoher Eliminationsleistung, die bei höherer hydraulische Belastung durch Zugabe der PAK aufrechterhalten wird.

Die GAK verweilt lange im Reaktor, bei Kläranlagen typischerweise Wochen bis Monate, weshalb nur wenig GAK benötigt wird und die Grundlast der Kläranlage effizient und kostengünstig abgearbeitet werden kann.

Wegen der hohen Korngrösse verbleibt die GAK auch bei hohen Steiggeschwindigkeiten des Abwassers innerhalb des Reaktors, ohne oben aus dem Reaktor hinaus zu schwemmen und verloren zu gehen. In vorzugsweisen Ausgestaltungen wird die Steiggeschwindigkeit des Abwassers bzw. der Zufluss des Abwassers derart gesteuert, dass Steiggeschwindigkeiten und Strömungsgeschwindigkeiten vermieden werden, bei denen die GAK aus dem Reaktor ausgeschwemmt wird. Hingegen werden Steiggeschwindigkeiten und Strömungsgeschwindigkeiten angestrebt, bei denen die GAK einen Schwebezustand innerhalb des Reaktors erreicht und sich die GAK-Körner über ein möglichst grosses Reaktorvolumen verteilen, ohne aus dem Reaktor auszutreten. In diesem Schwebezustand ist die Adsorption der Mikroverunreinigungen durch die GAK optimal.

Der duale Einsatz von GAK und PAK erlaubt somit unabhängig von Schwankungen der hydraulischen Belastung einen effizienten Einsatz des Adsorptionsmittels und eine effiziente Abtrennung von Mikroverunreinigungen mit einer geforderten Eliminationsrate. Spitzenbelastungen der Kläranlage können vorteilhaft aufgefangen werden, während die Grundlast effizient abgearbeitet wird.

Nachfolgend wird die Erfindung anhand von Zeichnungen näher erläutert. Dabei zeigt:

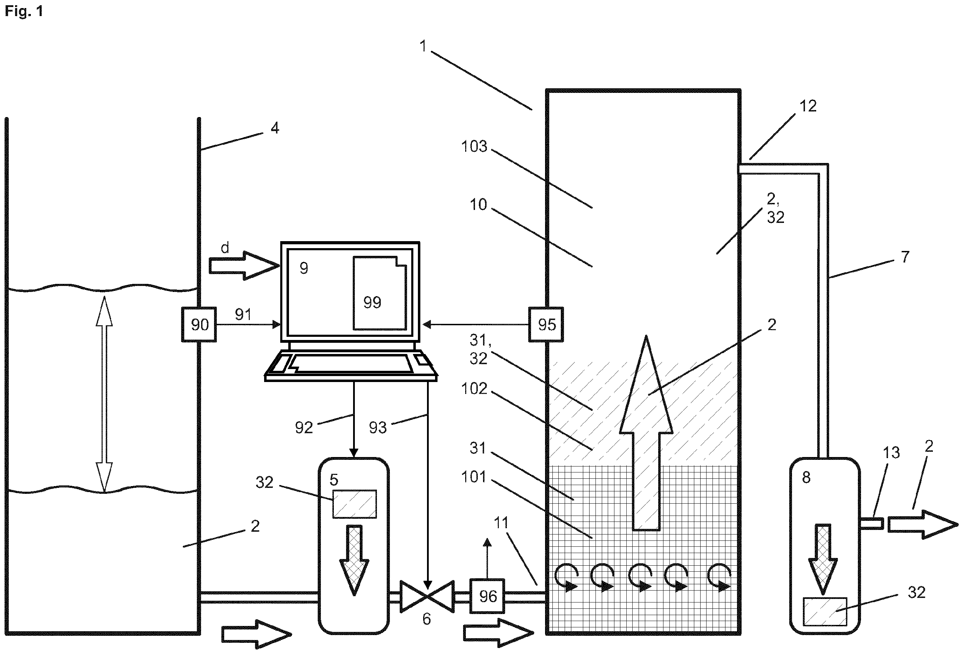

- Fig. 1: eine erfindungsgemässe Vorrichtung einer Kläranlage oder Wasserreinigungsanlage in einer vorzugsweisen Ausgestaltung, bei der Abwasser 2 in einer Phase tiefer hydraulischer Belastung in einem mit GAK 31 versehenen Reaktor 1 gereinigt wird und bei der das Abwasser 2 in einer Phase hoher hydraulischer Belastung mittels einer Zugabevorrichtung 5 mit PAK 32 beaufschlagt wird, wonach das mit PAK 32 beaufschlagte Abwasser 2 ebenfalls durch den Reaktor 1 geführt wird, an dessen Ausgang das gereinigte Abwasser 2 an eine Filterstufe 8 abgegeben wird, in der die PAK 32 wieder abgetrennt wird; und

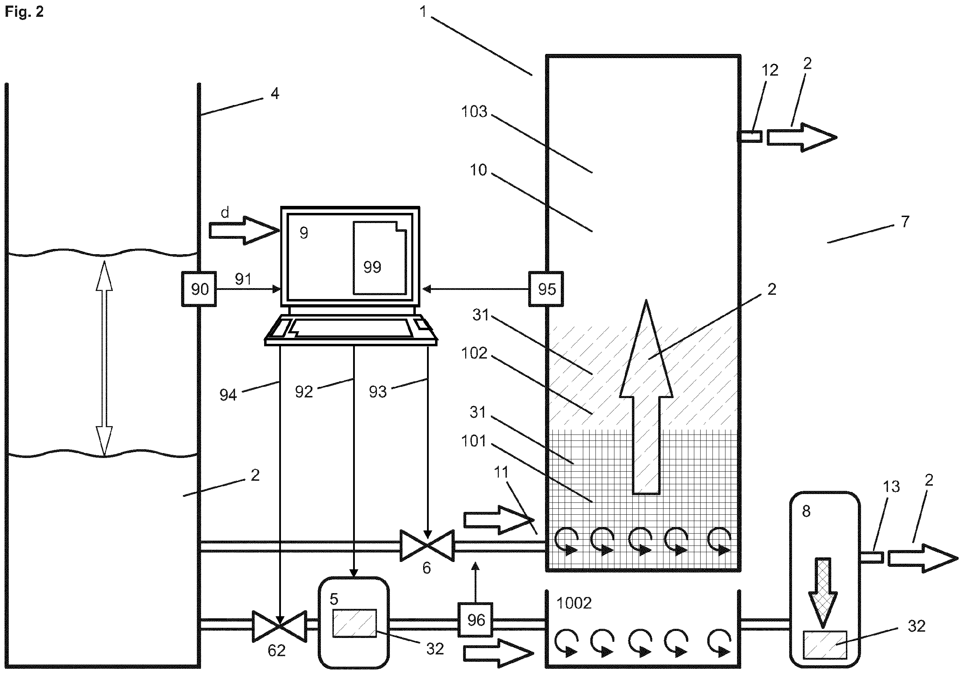

- Fig. 2: die Vorrichtung von Fig. 1 in einer vorzugsweisen Ausgestaltung, bei der das mit PAK 32 angereicherte Abwasser 2 nicht durch den Reaktor 1, sondern durch ein Hilfsbecken 1002 zur Filterstufe 8 geführt wird, in der die PAK 32 wieder abgetrennt wird.

Fig. 1 zeigt eine erfindungsgemässe Vorrichtung einer Kläranlage oder Wasserreinigungsanlage in vorzugsweiser Ausgestaltung. Zu reinigende Abwasser fliesst einem Eingangsbehälter 4 zu, von dem es zu einem Reaktor 1 geführt wird, in dem das Abwasser 2 mittels granulierter Aktivkohle (GAK) 31 von Mikroverunreinigungen befreit und wieder abgegeben wird. Die Vorrichtung ist lediglich in einer prinzipiellen Darstellung gezeigt, weshalb Sensoren, Aktoren und Pumpen, die in einer solchen Anlage üblicherweise in hoher Anzahl vorhanden sind, nicht gezeigt sind. Messvorrichtungen 90, 95 werden verwendet, um den Zustand, die Bewegung und/oder die Strömungsgeschwindigkeit des Abwassers oder den Zustand und gegebenenfalls die Position der gegebenenfalls schwebenden GAK 31 zu messen. Aktoren werden verwendet, um Ventile zu öffnen oder zu schliessen oder GAK 31 oder pulverförmige Aktivkohle (PAK) 32 zu fördern. Durch Pumpen kann das Abwasser 2 von Behälter 4 zu Behälter 1 und weiter gefördert werden.

PAK 32 kann beispielsweise durch Drehung einer Förderschraube aus einem mit PAK gefüllten Behälter gefördert und dem Abwasser 2 dosiert zugeführt werden. Durch Steuerung der Drehgeschwindigkeit der Förderschraube lässt sich die Abgabe der PAK 32 präzise einstellen, weshalb die gezeigte Zugabevorrichtung 5 auch eine Dosiervorrichtung ist.

Mit einem Pfeil ist symbolisiert, dass der Wasserstand im Eingangsbehälter 4 je nach hydraulischer Belastung der Kläranlage ändert. Der Wasserstand und somit die hydraulische Belastung wird mittels einer Messvorrichtung 90 erfasst. Entsprechende Messsignale oder Messwerte werden über eine Messleitung 91 einem Steuerrechner 9 zugeführt, in dem ein Steuerprogramm 99 implementiert ist. Dem Steuerrechner 9 können andere oder weitere Daten d zugeführt werden, die eine genauere Bestimmung der aktuellen und/oder zukünftigen hydraulischen Belastung oder der Abwasserreinigungsanlage erlauben.

Dies ist besonders wesentlich, da der Einsatz von PAK 32 erfindungsgemäss für die Abarbeitung von Spitzenlasten diente. Sofern sich hingegen die Grundlast langfristig verändert, wird vorzugsweise vorgesehen, dass die Anlage die veränderte Grundlast durch eine Anpassung der GAK 31 im Reaktor 1 erfolgt. Bei einer langfristigen Erhöhung der Grundlast wird die GAK-Betthöhe vorzugsweise vergrössert und bei einer langfristigen Reduktion der Grundlast wird die GAK-Betthöhe vorzugsweise verkleinert.

Mittels des Steuerprogramms 99 werden die Daten und/oder Messwerte ausgewertet und der Grad der hydraulischen Belastung der Kläranlage festgestellt. Im einfachsten Fall wird festgestellt, ob eine tiefe hydraulische Belastung unterhalb eines Schwellwerts oder eine hohe hydraulische Belastung oberhalb eines Schwellwerts vorliegt. Vorzugsweise wird Grad der hydraulischen Belastung hingegen präzise bestimmt, um die Eliminationsrate der Kläranlage präzise aufrechtzuerhalten.

Das Steuerprogramm 99 hat Zugriff auf Daten, die festlegen, welche hydraulische Belastung als tiefe oder hohe hydraulische Belastung einzustufen ist. Weiterhin enthält das Steuerprogramm 99 vorzugsweise Informationen bezüglich der Zugabe von PAK 32, die für eine bestimmte hydraulische Belastung erforderlich ist, um die festgelegte Eliminationsrate aufrechtzuerhalten. Die Eliminationsrate legt vorzugsweise in einem festgelegten Bereich, der nicht überschritten werden soll, um PAK einzusparen und der nicht unterschritten werden soll, um die minimal geforderte Qualität des gereinigten Abwassers 2 sicherzustellen.

Für tiefe hydraulische Belastungen wird der Betrieb in einer ersten Prozessphase implementiert, in der das Abwasser 2 ohne Zugabe von PAK 32 zum Reaktor 1 gefördert und dort durch die GAK 31 gereinigt wird.

Sobald eine hohe hydraulische Belastung erreicht wird, wird der Betrieb in einer zweiten Prozessphase implementiert, in der dem Abwasser 2 mittels der Zugabevorrichtung 5 PAK 32 zugegeben wird, in der Ausgestaltung von Fig. 1 bevor das Abwasser 2 durch das Ventil 6 zum Reaktor gelangt. Wie beschrieben, erfolgt die Abgabe der PAK 32 beispielsweise durch Drehen einer Dosierschraube oder Förderschraube. Die Drehgeschwindigkeit der Förderschraube wird der Zugabevorrichtung 5 vom Steuerrechner 9 durch das Steuersignal 92 vorgegeben. Die Drehgeschwindigkeit der Förderschraube wird vorzugsweise mit steigender Belastung, gegebenenfalls proportional zur Strömungsgeschwindigkeit des Abwassers 2 erhöht, sodass das Wasser pro Volumeneinheit konstant mit PAK 32 beaufschlagt wird. Die Strömungsgeschwindigkeit des dem Reaktor 1 zugeführten Abwassers Zwang wird beispielsweise mit der Messvorrichtung 96 gemessen.

Sobald die hydraulische Belastung sich wieder reduziert und den tiefen Bereich erreicht, wird die Zugabe der PAK 32 beendet. Der Prozess geht von der zweiten Prozessphase wieder in die erste Prozessphase über.

Das Abwasser 2 tritt am Reaktorfuss durch eine Eintrittsöffnung 11 in einen unteren Bereich 101 des Reaktors 1 ein, in dem die GAK 31 mit einer entsprechend der Grundlast gewählten GAK-Betthöhe gelagert und durch das eintretende Abwasser 2 aufgewirbelt wird. Dadurch steigt die aufgewirbelte GAK 31 in den mittleren Bereich 102 des Reaktorvolumens 10 auf und bildet einen Kontaktraum zur Reinigung des durchfliessenden Abwassers 2. In der ersten Prozessphase schwebt nur GAK 31 im mittleren Bereich 102 des Reaktors 1. Geschwindigkeit und Volumen des Abwassers 2 sind beim Eintritt in den Reaktor 1 derart gewählt, dass die im Reaktor 1 befindliche GAK 31 in Schwebe gebracht wird. So ist die Durchflussgeschwindigkeit (m3/s) des Abwassers vorzugsweise derart gewählt, dass die Steiggeschwindigkeit im Reaktor zwischen 0-36 m/h beträgt. Der Zustrom des eingelassenen Abwassers 2 ist an die Grösse des Reaktors 1 angepasst und umso höher je grösser das Volumen 10 des Reaktors 1 ist. Die Steiggeschwindigkeit ist auf einen Maximalwert begrenzt, so dass GAK-Körner nicht aus dem Reaktor 1 ausgeschwemmt werden. Dies kann beispielsweise auch mit optischen Sensoren überwacht werden. Die Steiggeschwindigkeit bei tiefer hydraulischer Belastung liegt typischerweise zwischen 6 m/h und 8 m/h.

Die GAK 31 im Reaktor 1 hat im Ruhezustand eine bestimmte Schütthöhe (ruhende Betthöhe), welche zwischen 1.2 m bis 3.2 m beträgt. Die maximal mögliche ruhende Betthöhe hängt von der Höhe des Reaktors 1 sowie von der festgelegten maximalen Steiggeschwindigkeit ab. Typischerweise weisen Reaktoren 1 Behälter mit einer Höhe von etwa 5 m auf.

Die ruhende Betthöhe, und somit die Menge an GAK 31 im Reaktor 1 wird derart eingestellt, dass die GAK 31 in der ersten Prozessphase die gewünschte Eliminationsrate bei tiefer hydraulischer Belastung erreicht. Die GAK 31 hat eine durchschnittliche Korngrösse zwischen 500 Mikrometer bis 1500 Mikrometer wobei eine enge Korngrössenverteilung um den gewählten Durchschnittswert verwendet wird.

Periodisch, typischerweise jeden Tag oder jeden zweiten Tag, wird ein Teil der GAK 31 im Reaktor 1, typischerweise 0.2% - 2%, entfernt und im gleichen Umfang durch neue GAK 31 ersetzt. Damit überaltert die GAK 31 im Reaktor 1 nicht und die Eliminationsleistung bei tiefer hydraulischer Belastung kann permanent konstant hoch gehalten werden.

Wie dies beschrieben wurde, wird die PAK 32 in der zweiten Prozessphase bei hoher hydraulischer Belastung vor dem Reaktor 1 dem Abwasser beigegeben. Die Beigabe ist derart gestaltet, dass die PAK 32 sich im Abwasser 2 gut verteilt. Je nach Qualität des Abwassers 2 liegen die Werte der PAK typischerweise bei 10 g/m3 - 20 g/m3 zu behandelndem Abwasser. Die im Abwasser 2 verteilte PAK 32 durchströmt den Reaktor 1 und die GAK 31 zusammen mit dem Abwasser 2 vorzugsweise von unten nach oben und verlässt den Reaktor 1 im oberen Bereich 103.

Bei höherer hydraulischer Belastung expandiert die GAK 31 im Reaktor 1 nach oben. Die GAK 31 muss deshalb eine ausreichende Korngrösse aufweisen, damit die Kohlekörner im aufwärtsgerichteten Wasserstrom schweben, jedoch nicht oben aus dem Reaktor 1 gedrückt werden. Durch eine vorzugsweise optische Messvorrichtung 95 wird das Ansteigen der GAK 31 vorzugsweise überwacht. Sofern die GAK 31 droht, in den oberen Bereich 103 des Reaktors 1 zu gelangen und ausgeschwemmt zu werden, wird dies vom Steuerrechner 9 durch Abgabe eines Steuersignals 93, durch das das Ventil 6 gesteuert wird, verhindert.

Nachdem die gegebenenfalls schwebende GAK 31 durchströmt wurde, gelangt das von Mikroverunreinigungen befreite Abwasser 2 in den oberen Bereich bzw. die Überstandszone 103 des Reaktors 1 aus der das gegebenenfalls mit PAK 32 angereicherte Abwasser 2 durch eine Austrittsöffnung 12 zu einer Filterstufe 8 fliesst. In der Filterstufe 8 wird die PAK 32 aus dem gereinigten Abwasser 2 abgetrennt, welches in der Folge an eine Ausgangsleitung 13 abgegeben wird. Die Filterstufe 8 ist z.B. ein Sandfilter oder ein Tuchfilter.

Fig. 2 zeigt die Vorrichtung von Fig. 1 in einer weiteren bevorzugten Ausgestaltung, bei der das mit PAK 32 angereicherte Abwasser 2 nicht durch den Reaktor 1 zur Filterstufe 8 geführt wird. Sobald eine hohe hydraulische Belastung festgestellt wird, wird das zusätzliche Abwasser 2 durch ein weiteres Ventil 62 der Zugabevorrichtung 5 zugeführt, in der dem Abwasser 2 PAK 32 zugegeben wird. Das mit PAK 32 angereicherte Abwasser 2 wird nun nicht durch den Reaktor 1, sondern vorzugsweise durch ein Hilfsbecken 1002 zur Filterstufe 8 geführt. Dies ist zulässig sofern die Verweilzeit der PAK 32 im Abwasser 2 ausreichend lang ist und beispielsweise in einem Zeitbereich von 7 - 15 Minuten liegt.

In dieser Ausgestaltung der Vorrichtung durchströmt die der Grundbelastung entsprechende Menge des Abwassers 2 den mit GAK 31 beschickten Reaktor 1, während Spitzenbelastungen des Abwassers 2 im alternativen Reinigungsweg bzw. im Hilfsprozess mittels PAK 32 behandelt werden.

In der ersten Prozessphase ist daher nur der Reaktor 1 mit der GAK 31 aktiv. In der zweiten Prozessphase, bei hoher hydraulischer Belastung, wird hingegen der Hilfsprozess mit Reinigung durch die PAK 32 zugeschaltet. Die Dosierung der PAK 32 mittels Förderschraube erfolgt vorzugsweise in Abhängigkeit der Durchflussmenge des Abwassers 2, welches das zweite Ventil 62 durchfliesst. Die Durchflussmenge kann wiederum durch die Messvorrichtung 96 gemessen und dem Steuerrechner 9 gemeldet werden. Der Hilfsprozess für die Realisierung der zweiten Prozessphase kann bei bereits existierenden Kläranlagen bedarfsweise eingebaut und implementiert werden. Die Grundlast des Abwassers kann bei dieser Ausgestaltung der Vorrichtung daher effizient durch den Reaktor 1 abgearbeitet werden. Dabei werden längerfristige Änderungen der Grundlast durch Anpassung der Betthöhe der GAK berücksichtigt. Beispielsweise erfolgen solche Anpassungen saisonal und/oder unter Berücksichtigung längerfristiger Wetterprognosen. Spitzenbelastungen beispielsweise durch lokale Regenfälle werden in der Folge durch den Hilfsprozess abgearbeitet.

## Patentansprüche

1. Verfahren zur Behandlung von Abwasser (2) insbesondere zur Beseitigung von Mikroverunreinigungen in einer Kläranlage mit einem Reaktor (1), der eine Eintrittsöffnung (11) für das Abwasser (2), eine Kontaktzone (101), in der granulierte Aktivkohle (31) mit dem Abwasser (2) zusammenwirkt, eine Überstandszone (103) und eine daran anschliessende Austrittsöffnung (12) aufweist, aus der das gereinigte Abwasser (2) austritt, **dadurch gekennzeichnet, dass** die hydraulischer Belastung der Kläranlage bestimmt und wenigstens zwischen einer tiefen hydraulischen Belastung und einer hohen hydraulischen Belastung unterschieden wird, dass dem Abwasser (2) bei hoher hydraulischer Belastung pulverförmige Aktivkohle (32) zugegeben wird, und dass das mit pulverförmiger Aktivkohle (32) angereicherte Abwasser (2) einer Filterstufe (8) zugeführt wird, in der die pulverförmige Aktivkohle (32) vom gereinigten Abwasser (2) wieder entfernt wird.

2. Verfahren nach Anspruch 1, **dadurch gekennzeichnet, dass** das mit pulverförmiger Aktivkohle (32) angereicherte Abwasser (2) durch den Reaktor (1) oder direkt, gegebenenfalls durch ein Hilfsbecken(1002), zur Filterstufe (8) geführt wird.

3. Verfahren nach Anspruch 1 oder 2, **dadurch gekennzeichnet, dass** die pulverförmige Aktivkohle (32) dem Abwasser (2) vor dem Eintritt in den Reaktor (1) zugegeben wird.

4. Verfahren nach einem der Ansprüche 1, 2 oder 3, **dadurch gekennzeichnet, dass** die Menge und der Beladungsgrad der granulierten Aktivkohle (31) im Reaktor (1) derart gewählt ist, dass bei tiefer hydraulischer Belastung eine definierte Reinigungsleistung erzielt wird.

5. Verfahren nach einem der Ansprüche 1 - 4, **dadurch gekennzeichnet, dass** der Zufluss des Abwassers (2) in den Reaktor (1) eine Aufwärtsströmung erzeugt welche die granulierten Aktivkohle (31) in einen Schwebezustand innerhalb des Reaktors (1) bringt.

6. Verfahren nach einem der Ansprüche 1 - 5, **dadurch gekennzeichnet, dass** während einer hohen hydraulischen Belastung die Aufwärtsströmung des Abwassers (2) im Reaktor (1) derart limitiert wird, dass die granulierte Aktivkohle (31) nicht aus dem Reaktor (1) ausgeschwemmt wird.

7. Verfahren nach einem der Ansprüche 1 - 6, **dadurch gekennzeichnet, dass** das Mass der Zugabe der pulverförmigen Aktivkohle (32) in Abhängigkeit der Zuflussmenge des Abwassers (2) gewählt wird.

8. Verfahren nach einem der Ansprüche 1 - 7, **dadurch gekennzeichnet, dass** das Abwasser (2) dem Reaktor (1) in einem unteren Bereich zugeführt und in einem oberen Bereich wieder entnommen wird, sodass das Abwasser (2) den Reaktor (1) von unten nach oben durchströmt.

9. Verfahren nach einem der Ansprüche 1 - 8, **dadurch gekennzeichnet, dass** die hydraulischer Belastung durch Messung von Pegelständen des Abwassers (2), Durchfluss des Abwassers (2), Strömungsgeschwindigkeiten des Abwassers (2), des Zuflusses des Abwassers (2) zum Reaktor (1) bestimmt wird, oder dass die hydraulischer Belastung durch Überwachung des Zustands von Ventilen oder entsprechenden Steuerwerten oder Steuersignalen bestimmt wird.

10. Vorrichtung zur Durchführung des Verfahrens nach einem der Ansprüche 1 - 9 für eine Kläranlage mit einem Reaktor (1), der eine Eintrittsöffnung (11) für das Abwasser (2), eine Kontaktzone (101) in der granulierte Aktivkohle (31) mit dem Abwasser (2) zusammenwirkt, eine Überstandszone (102) und eine daran anschliessende Austrittsöffnung (12) aufweist, aus der das gereinigte Abwasser (2) austritt, **dadurch gekennzeichnet, dass** Mittel (90) zur Bestimmung der hydraulischen Belastung der Kläranlage und ein Steuergerät (9) mit einem Steuerprogramm (99) vorgesehen sind, wobei das Steuerprogramm (99) zur Unterscheidung zwischen einer tiefen hydraulischen Belastung und einer hohen hydraulischen Belastung und zur Steuerung einer dem Reaktor (1) vorzugsweise vorgeschalteten Zugabevorrichtung (5) geeignet ist, mittels der dem Abwasser (2) bei hoher hydraulischer Belastung pulverförmige Aktivkohle (32) zuführbar ist, und dass eine Filterstufe (8) vorgesehen ist, in der die pulverförmige Aktivkohle (32) aus dem Abwassers (2) entfernbar ist.

11. Vorrichtung nach Anspruch 10, **dadurch gekennzeichnet, dass** das mit pulverförmiger Aktivkohle (32) angereicherte Abwasser (2) durch den Reaktor (1) oder direkt, gegebenenfalls durch ein Hilfsbecken(1002), zur Filterstufe (8) führbar ist.

12. Vorrichtung nach Anspruch 10 oder 11, **dadurch gekennzeichnet, dass** wenigstens eine Messvorrichtung (90) zur Bestimmung der hydraulischen Belastung insbesondere durch Messung von Pegelständen des Abwassers (2), Durchfluss des Abwassers (2), Strömungsgeschwindigkeiten des Abwassers (2), oder des Zuflusses des Abwassers (2) zum Reaktor (1) oder dass die Bestimmung der hydraulischen Belastung durch Überwachung von Ventilen oder entsprechenden Steuerwerten oder Steuersignalen erfolgt.

13. Vorrichtung nach Anspruch 10, 11 oder 12, **dadurch gekennzeichnet, dass** Steuervorrichtung (9) zur Abgabe eines Steuersignals (93) an ein steuerbares Ventil 6 vorgesehen ist, durch das der Zufluss des Abwassers (2) zum Reaktor (1) steuerbar ist.

14. Vorrichtung nach einem der Ansprüche 10 - 13, **dadurch gekennzeichnet, dass** das Abwasser (2) dem Reaktor (1) in einem unteren Bereich zuführbar und in einem oberen Bereich wieder entnehmbar ist.

15. Vorrichtung nach einem der Ansprüche 10 - 14, **dadurch gekennzeichnet, dass** die Filterstufe (8) ein Sandfilter oder ein Tuchfilter ist.
